(19) Europäisches Patentamt
European Patent Office
Office européen des brevets

(11) Numéro de publication : **0 102 293**
**B1**

(12)
# FASCICULE DE BREVET EUROPÉEN

(45) Date de publication du fascicule du brevet : **05.03.86**

(51) Int. Cl.[4] : **C 01 B 33/04**, C 25 C 3/02, C 01 B 6/04

(21) Numéro de dépôt : **83401662.8**

(22) Date de dépôt : **16.08.83**

(54) **Procédé continu de préparation de silane.**

(30) Priorité : **31.08.82 FR 8214863**

(43) Date de publication de la demande : **07.03.84 Bulletin 84/10**

(45) Mention de la délivrance du brevet : **05.03.86 Bulletin 86/10**

(84) Etats contractants désignés : **BE DE FR GB IT NL**

(56) Documents cités :
**CH-A- 388 917**
**FR-A- 1 323 193**
**FR-A- 2 365 518**
**CHEMICAL ABSTRACTS, vol. 96, 1982, page 141, résumé no. 106651k, COLUMBUS, Ohio (US)**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Jacubert, Serge**
**12, rue Jules Herbron**
**F-78220 Viroflay (FR)**
Inventeur : **Grosbois, Jean**
**357 Parc de Cassan**
**F-95290 L'Isle-Adam (FR)**
Inventeur : **Verdier, Jean-Michel**
**257, rue de Faubourg Saint-Martin**
**F-75010 Paris (FR)**

(74) Mandataire : **Savina, Jacques et al**
**RHONE-POULENC RECHERCHES Service Brevets Chimie et Polymères 25, quai Paul Doumer**
**F-92408 Courbevoie Cédex (FR)**

**EP 0 102 293 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé continu de préparation de silane.

On a déjà décrit, par exemple dans le brevet des Etats-Unis d'Amérique N° 3 078 218 ou dans le brevet Français N° 2 365 518, un procédé de préparation de silane ($SiH_4$) par réaction de chlorosilanes de formule $SiH_{4-x} Cl_x$ dans laquelle x peut être avantageusement égal à 3 ou 4 avec de l'hydrure de lithium (LiH). La réaction chimique mise en œuvre peut s'écrire :

$$SiH_{4-x}Cl_x + x\ LiH \rightarrow SiH_4 + x\ LiCl$$

L'hydrure de lithium utilisé provient de la réaction du lithium avec l'hydrogène, ledit lithium provenant de l'électrolyse du chlorure de lithium. Selon le procédé décrit dans ces brevets, il est connu d'effectuer chacune des réactions électrolyse, hydrogénation et production de silane dans un même milieu constitué par des sels fondus choisis parmi les chlorures alcalins et alcalino-terreux dont l'un est le chlorure de lithium.

Selon ce procédé, on réalise les diverses réactions dans un dispositif unique de forte contenance dans lequel le milieu réactionnel joue un rôle de fournisseur de réactif (chlorure de lithium) et un rôle de volant thermique pour l'évacuation des calories générées dans les diverses réactions chimiques. Toutefois, et c'est là l'un des principaux inconvénients du procédé, le milieu réactionnel qui contient du chlorure de lithium, doit être utilisé en quantités très importantes par rapport aux quantités de chlorure de lithium (réactif) qui sont transformées dans les diverses réactions. De plus, la mise en œuvre d'un dispositif unique dans lequel le milieu réactionnel joue le rôle de volant thermique ne permet pas de mettre en œuvre chacune des réactions dans des conditions optimum.

On connaît par ailleurs d'après la demande de brevet japonais publiée sous le N° 56 169 120 (N° de dépôt 5 572 789) un procédé semblable à celui décrit dans le brevet des Etats-Unis d'Amérique qui a été commenté ci-dessus et selon lequel les diverses réactions sont également mises en œuvre dans un dispositif unique dans lequel le lithium produit lors de l'électrolyse au lieu d'être hydrogéné immédiatement dès sa formation, est séparé du milieu de sels fondus et transporté dans la zone d'hydrogénation. Le procédé décrit dans ce brevet présente les mêmes inconvénients que ceux décrits pour le procédé de l'USP N° 3 078 218. De plus, le dispositif de transfert du milieu réactionnel d'une zone de réaction à l'autre est très complexe et difficile à mettre en œuvre industriellement. Par ailleurs, de tels dispositifs uniques rendent malaisée la séparation entre le chlore et l'hydrogène, séparation qui est absolument nécessaire pour la sécurité d'une installation industrielle.

On connaît également d'après le brevet des Etats-Unis d'Amérique N° 3 163 590 qui correspond au document FR-A-1 323 193 un procédé de préparation de silane selon les mêmes réactions que celles décrites dans l'US 3 078 218 - dans lequel celles-ci sont mises en œuvre dans un appareillage unique mais dans des zones séparées.

Selon les mises en œuvre décrites dans ce brevet USP 3 163 590 et qui sont illustrées aux figures 2 et 4, il s'avère nécessaire d'opérer la séparation du lithium provenant de l'électrolyse d'avec le mélange de sels fondus avant d'en opérer l'hydrogénation. Par ailleurs, toutes les réactions mises en jeu dans le procédé de ce brevet doivent être réalisées simultanément sans tenir compte de leur cinétique respectives qui sont très différentes, il s'ensuit une mise en œuvre très délicate de l'ensemble de ces réactions notamment dans les régimes transitoires correspondant au démarrage, à l'arrêt, aux variations de production.

Il a maintenant été trouvé, et c'est là l'objet de la présente invention, que, dans la réaction de préparation en continu du silane par action de chlorosilanes sur l'hydrure de lithium, électrolyse du chlorure de lithium formé puis hydrogénation du lithium obtenu, les dites réactions étant effectuées en milieu sels fondus dans des réacteurs spécifiques, il n'est pas nécessaire de séparer le lithium métallique provenant de l'électrolyse d'avec le mélange de sels fondus avant d'en opérer l'hydrogénation.

Cette invention qui va à l'encontre du consensus apparent actuel concernant le procédé de préparation du silane en milieu de sels fondus aussi bien lorsqu'il est mis en œuvre dans un dispositif unique de forte contenance que dans des zones séparées présente les avantages suivants :

elle permet une mise en œuvre très simple et continue dans laquelle un mélange de sels fondus appelé par la suite mélange de base sert de véhicule des divers réactifs utilisés dans les différentes réactions : hydrure de lithium, chlorure de lithium, lithium. Ceci a pour conséquence essentielle de permettre un fonctionnement continu dans lequel le mélange de sels fondus est utilisé en circulation continue et fermée. La circulation des sels fondus avec les réactifs qui est totalement contrôlable permet une maitrise complète de chacune des réactions et une adaptation optimum de leurs conditions de fonctionnement ; l'invention permet ainsi de maîtriser totalement sans aucune difficulté les régimes transitoires tels que démarrage, arrêt ou variations de production.

elle permet de minimiser la quantité de mélange sels fondus mis en œuvre ce qui a pour conséquence de diminuer la taille des dispositifs utilisés.

elle permet d'optimiser les conditions propres nécessaires à la mise en œuvre des différentes réactions.

Avec simplicité et souplesse, l'invention résout la plupart des problèmes que posait la fabrication de silane selon les procédés décrits dans l'Art Antérieur. De plus, elle permet une mise en œuvre à l'échelle industrielle d'un procédé ancien qui malgré de nombreuses études n'avait jamais pu atteindre ce stade.

La présente invention concerne donc un procédé continu de préparation de silane par réaction de chlorosilanes sur de l'hydrure de lithium, électrolyse du chlorure de lithium obtenu et hydrogénation du lithium obtenu, ces diverses opérations étant effectuées dans des réacteurs spécifiques et dans un mélange de sels fondus constitué par du chlorure de lithium et au moins un chlorure alcalin et/ou alcalino-terreux, la composition dudit mélange étant voisine de la composition eutectique connue, caractérisé en ce que :

les diverses réactions sont réalisées dans un mélange de base constitué d'un mélange de sels fondus comportant du chlorure de lithium, du chlorure de potassium et éventuellement d'autres chlorures alcalins ou alcalino-terreux ; ledit mélange de base véhicule les divers réactifs mis en œuvre dans les différentes réactions : l'hydrure de lithium, le chlorure de lithium et le lithium et circule en une boucle fermée entre ces réactions ;

la réaction entre les chlorosilanes et l'hydrure de lithium est effectuée dans un réacteur alimenté en continu d'une part en chlorosilanes et d'autre part en un mélange comportant ledit mélange de base et de l'hydrure de lithium, la proportion d'hydrure de lithium est au plus égale à 21 moles pour 100 moles de mélange de base ; la réaction produit du silane et du chlorure de lithium provenant de la transformation de l'hydrure de lithium ;

la réaction d'électrolyse du chlorure de lithium est effectuée en milieu naturellement agité dans un électrolyseur alimenté avec le mélange de sels fondus provenant de la réaction entre les chlorosilanes et l'hydrure de lithium ; ce mélange de sels fondus est constitué par le mélange de base et le chlorure de lithium issu de ladite réaction, la proportion dudit chlorure de lithium étant au plus égale à 21 moles pour 100 moles de mélange de base ; la réaction d'électrolyse donne naissance d'une part à du chlore et d'autre part à du lithium métallique qui est évacué avec le mélange de base ;

la réaction d'hydrogénation du lithium est effectuée de préférence sous agitation dans un hydrogénateur alimenté d'une part avec le lithium et le mélange de base provenant de l'électrolyseur et d'autre part avec de l'hydrogène ; la réaction d'hydrogénation produit de l'hydrure de lithium provenant de la transformation du lithium, qui est évacué avec le mélange de base vers le réacteur réalisant la réaction entre les chlorosilanes et l'hydrure de lithium pour la production du silane.

La demanderesse a été conduite à définir un mélange de base servant de véhicule aux différents réactifs : LiCl, LiH, Li. Le milieu devant rester fluide et véhiculable d'une réaction à l'autre, la génération du silane conduisant à la formation de LiCl, il est donc nécessaire que le mélange de base soit appauvri en LiCl pour que la température de génération du silane soit la plus faible possible afin d'optimiser la production du silane. C'est ainsi, que selon un mode de réalisation préféré, la composition du mélange de base est choisie comme étant appauvrie de 1 à 4 % en mole de chlorure de lithium par rapport à la composition eutectique des sels composant ledit mélange de base.

Toutefois, il serait possible d'employer des mélanges de base non appauvris en LiCl, mais cela nécessiterait un fonctionnement à une plus haute température pour conserver le mélange fluide et véhiculable et donc diminuerait le rendement de génération de silane par suite de son craquage partiel.

Les chlorures alcalin et/ou alcalino-terreux mis en œuvre selon l'invention peuvent notamment être choisis parmi les chlorures de sodium, rubidium, strontium, magnésium, calcium, baryum.

Par ailleurs, il est souhaitable lors du transfert du mélange de base enrichi en chlorure de lithium depuis le réacteur où s'effectue la réaction entre les chlorosilanes et l'hydrure de lithium jusqu'à l'électrolyseur, d'éliminer les impuretés éventuellement présentes. Les impuretés principales étant des particules solides de silicium, lesdites particules sont avantageusement éliminées par une simple opération de filtration ou par traitement avec du chlore ou du chlorure d'hydrogène.

La réaction entre les chlorosilanes et l'hydrure de lithium a lieu de préférence à une température de 380 °C plus ou moins 30 °C ; si cette température est trop basse, on peut craindre la précipitation des composants de l'eutectique (c'est-à-dire par exemple que, si l'on utilise des composants présentant un eutectique ternaire, la température minimale utilisable pourra être de 350 °C) ; si, au contraire, cette température est trop élevée (supérieure à environ 410 °C), il se développe une réaction parasite de craquage du silane produit qui entraîne des pertes de silicium et l'obligation de purifier le mélange fondu sortant de ce réacteur.

En outre, il peut être avantageux d'éliminer également du mélange de base avant son transfert à l'électrolyseur les traces éventuelles d'hydrure de lithium contenues dans celui-ci ; cette élimination est opérée par exemple par réaction avec HCl ou $Cl_2$ ou par tout autre moyen.

Les chlorosilanes utilisés dans la réaction avec l'hydrure de lithium proviennent avantageusement de la réaction entre du silicium métallurgique en poudre et du chlorure d'hydrogène ou du chlore provenant eux-mêmes indirectement ou directement de l'électrolyse.

L'hydrure de lithium utilisé dans la réaction avec les chlorosilanes est véhiculé par le mélange de base et provient de l'étape d'hydrogénation du lithium. La proportion d'hydrure de lithium véhiculé par le mélange de base est de préférence au plus égale à 18 moles pour 100 moles de mélange de base.

La réaction d'électrolyse est réalisée à une température de 450 °C plus ou moins 50 °C ; on notera que cette réaction d'électrolyse dégage normalement un certain nombre de calories, utilisable pour

amener le mélange fondu de 380 °C ± 30 °C à 450 °C ± 50 °C ; une température élevée est favorable dans la mesure où on sait que la conductibilité du mélange de sels fondus augmente avec la température ; par contre, les conditions techniques actuelles (notamment la résistance à la corrosion des matériaux dont on dispose) empêchent d'effectuer cette électrolyse à température supérieure à 500 °C, de plus, malgré la protection naturelle du lithium produit contre une réaction de ce lithium avec le chlore produit, on constate qu'à des températures supérieures à 500 °C, la réaction de recombinaison du lithium et du chlore devient plus importante.

La proportion du chlorure de lithium dans le mélange de base qui provient de la transformation de l'hydrure de lithium est de préférence au plus égale à 18 moles pour 100 moles de mélange de base.

Le chlore produit lors de l'électrolyse peut après éventuellement réaction de combustion avec de l'hydrogène fournir l'acide chlorhydrique qui est avantageusement utilisé avec le silicium métallurgique pour fabriquer les chlorosilanes ainsi qu'il a été décrit ci-dessus. Le chlore ou le chlorure d'hydrogène pouvant également être utilisés pour éliminer, le cas échéant, les impuretés (particules solides de silicium) et/ou l'hydrure de lithium éventuellement présents dans le mélange de base avant l'électrolyse.

La réaction d'hydrogénation du lithium pour donner de l'hydrure de lithium est effectuée à 490 °C plus ou moins 20 °C. En effet, lorsque la température est trop basse (inférieure à environ 470 °C), la vitesse de la réaction d'hydrogénation est beaucoup trop faible ; par contre, lorsque l'on veut opérer à des températures supérieures à environ 510 °C, on se heurte rapidement (compte tenu des possibilités technologiques actuelles) à une corrosion importante des matériaux qui constituent le réacteur d'hydrogénation.

Le bain de réaction, lors de cette hydrogénation, doit être agité et on opère de préférence à une pression inférieure à environ 5 bars.

Le procédé, selon l'invention, peut être schématisé dans son principe (circulation) et son meilleur mode de réalisation (conditions opératoires) sur les figures 1 et 2.

Sur la figure 1, on a représenté schématiquement les diverses opérations réalisées et, sur la figure 2, on a représenté, sur un diagramme, les conditions opératoires et les concentrations en chlorure de lithium dans les diverses opérations, selon l'invention.

Sur la figure 1, on représente :

en (1) le réacteur dans lequel se déroule la réaction entre les chlorosilanes et l'hydrure de lithium ; ce réacteur est alimenté d'une part (2) par un mélange de chlorosilanes (par exemple $HSiCl_3$ et $SiCl_4$) et d'autre part (3) par un mélange comportant le mélange de base (par exemple chlorure de potassium, chlorure de lithium, la concentration en chlorure de lithium étant d'environ 3 % (en mole) inférieure à la concentration de ce sel dans l'eutectique (chlorure de lithium, chlorure de potassium) et de l'hydrure de lithium jusqu'à 21 moles pour 100 moles dudit mélange de base ; il ressort de ce réacteur d'une part du silane (4) $SiH_4$ et d'autre part (5) ledit mélange eutectique de sels fondus qui comporte au plus 21 % en mole, par rapport au mélange de base, d'un excès de chlorure de lithium ;

en (6) un filtre par lequel on élimine les particules de silicium contenues dans le mélange sortant de (1) ;

en (7) le réacteur d'électrolyse ; ce réacteur est alimenté par le mélange provenant de (6) ; la réaction d'électrolyse conduit à la production d'une part de chlore (8) non dilué par un gaz inerte et qui peut éventuellement être réutilisé dans la même installation pour la production des chlorosilanes et d'autre part (9) d'un mélange formé du mélange de base et du lithium, ce produit pouvant être présent jusqu'à une concentration maximale d'environ 21 moles de lithium pour 100 moles de mélange de base ; le lithium (métal) se trouve apparemment sous forme de particules dispersées dans le bain des sels fondus ;

en (10) le réacteur dans lequel on réalise l'hydrogénation du lithium contenu dans le mélange fondu provenant de l'électrolyseur (7) ; ce réacteur est bien évidemment alimenté (11) en hydrogène et il en sort (3) un mélange contenant le mélange de base et jusqu'à 21 % en mole au maximum d'hydrure de lithium, étant entendu que la totalité du lithium présent dans le mélange fondu provenant de l'électrolyseur (7) a été transformée en hydrure de lithium ; ce mélange sortant du réacteur d'hydrogénation est envoyé dans le réacteur (1).

Sur la figure 2, on a représenté les diverses opérations effectuées en se référant d'une part (ordonnée) aux températures utilisées et d'autre part (abscisse) au % en mole du chlorure de lithium contenu dans un mélange chlorure de lithium, chlorure de potassium comme mélange de sels fondus ; on rappelle que l'eutectique chlorure de lithium-chlorure de potassium fond à 352 °C et comporte 58,8 % en mole de chlorure de lithium.

Dans cet exemple, le mélange de base dont la composition est représentée par le point A contient 56 % en mole de LiCl, c'est-à-dire que ce mélange contient, par rapport à l'eutectique, un défaut de LiCl d'environ 3 % en mole.

Sur cette figure on peut suivre la composition du mélange binaire LiCl-KCl exprimée en % molaire de LiCl à chacune des étapes du procédé. La figure indique également les températures retenues pour chacune des réactions du procédé et permettent de rester dans le domaine liquide du diagramme.

A-B représente l'évolution du mélange dans le réacteur (1) ; température de 400 °C ;

B-C représente le chauffage avant l'électrolyse dans l'électrolyseur (7) ;

C-D représente l'électrolyse ; température à 450 °C ;

D-E représente le chauffage à 490 °C avant l'hydrogénation en E dans le réacteur (10)

E-A représente le refroidissement pour retour au réacteur (1) ce qui ne modifie pas la composition du mélange en LiCl et KCl ; le mélange obtenu étant alors recyclé dans le réacteur (1).

L'exemple non limitatif suivant illustre l'invention en se référant à la figure 3.

On met en œuvre le procédé continu dans les conditions suivantes :

composition du flux sortant du réacteur (1) et allant au dispositif de filtration (6) (en kmol/h) ;

| | |
|---|---|
| total | 2,316 |
| LiCl | 1,470 |
| KCl | 0,840 |
| Si (k.atome-gramme/h) | 0,006 |
| température moyenne | 395 °C |

composition du flux sortant du réacteur (6) et allant vers le dispositif d'électrolyse (7), la même que ci-dessus, moins les particules de silicium qui ont été éliminées par filtration ;

l'électrolyse est effectuée à une température moyenne de 450 °C ;

composition du flux sortant du réacteur (7) et allant vers le dispositif d'hydrogénation (10) (en kmol/h) ;

| | |
|---|---|
| total | 2,310 |
| LiCl | 1,070 |
| KCl | 0,840 |
| Li (k.atome-gramme/h) | 0,400 |

de plus, on récupère (sortie 8) 0,200 kmol/h de chlore.

La réaction dans le dispositif d'hydrogénation est effectuée à une température moyenne de 490 °C ;

composition du flux sortant du dispositif d'hydrogénation (10) et allant vers le réacteur (1) (en kmol/h), la même que ci-dessus, mais les 0,400 k.atome-gramme/h de Li ont été transformés en 0,400 kmol/h de LiH ;

le réacteur (1) est alimenté (2) avec un mélange de :

0,116 kmol/h de trichlorosilane

et 0,013 kmol/h de tétrachlorosilane

le flux (4) sortant du réacteur (1) est composé de 0,123 kmol/h de silane et 0,012 kmol/h d'hydrogène ;

le réacteur (14) est alimenté avec 0,200 kmol/h de chlore venant de l'électrolyse (7) par la sortie (8) et 0,200 kmol/h d'hydrogène (15), le flux sortant (13) est constitué de 0,400 kmol/h de chlorure d'hydrogène ;

le réacteur (12) est alimenté par (13) avec 0,400 kmol/h de chlorure d'hydrogène et par (16) avec 0,130 k atome g/h de silicium métallurgique. Après séparation les flux sortant sont composés en (2) d'un mélange contenant 0,116 kmol/h de trichlorosilane et 0,013 kmol/h de tétrachlorosilane et en (17) de 0,142 kmol/h d'hydrogène.

**Revendications**

1. Procédé continu de préparation de silane par réaction de chlorosilanes sur de l'hydrure de lithium, électrolyse du chlorure de lithium obtenu et hydrogénation du lithium obtenu, ces diverses opérations étant effectuées dans des réacteurs spécifiques et dans un mélange de sels fondus constitué par du chlorure de lithium et au moins un chlorure alcalin et/ou alcalino-terreux, la composition dudit mélange étant voisine de la composition eutectique connue, caractérisé en ce que :

les diverses réactions sont réalisées dans un mélange de base constitué d'un mélange de sels fondus comportant du chlorure de lithium, du chlorure de potassium et éventuellement d'autres chlorures alcalins ou alcalino-terreux ; ledit mélange de base véhicule les divers réactifs mis en œuvre dans les différentes réactions : l'hydrure de lithium, le chlorure de lithium et le lithium et circule en une boucle fermée entre ces réactions ;

la réaction entre les chlorosilanes et l'hydrure de lithium est effectuée dans un réacteur alimenté en continu d'une part en chlorosilanes et d'autre part en un mélange comportant ledit mélange de base et de l'hydrure de lithium, la proportion d'hydrure de lithium est au plus égale à 21 moles pour 100 moles de mélange de base ; la réaction produit du silane et du chlorure de lithium provenant de la transformation de l'hydrure de lithium ;

la réaction d'électrolyse du chlorure de lithium est effectuée en milieu naturellement agité dans un électrolyseur alimenté avec le mélange de sels fondus provenant de la réaction entre les chlorosilanes et l'hydrure de lithium ; ce mélange de sels fondus est constitué par le mélange de base et le chlorure de lithium issu de ladite réaction, la proportion dudit chlorure de lithium étant au plus égale à 21 moles pour 100 moles de mélange de base ; la réaction d'électrolyse donne naissance d'une part à du chlore et d'autre part à du lithium métallique qui est évacué avec le mélange de base ;

la réaction d'hydrogénation du lithium est effectuée de préférence sous agitation dans un hydrogénateur alimenté d'une part avec le lithium et le mélange de base provenant de l'électrolyseur et d'autre part avec de l'hydrogène ; la réaction d'hydrogénation produit de l'hydrure de lithium provenant de la transformation du lithium, qui est évacué avec le mélange de base vers le réacteur réalisant la réaction entre les chlorosilanes et l'hydrure de lithium pour la production du silane.

2. Procédé selon la revendication 1 caractérisé en ce que la composition du mélange de base est appauvrie de 1 à 4 % en mole de chlorure de lithium par rapport à la composition eutectique des sels composant ledit mélange de base.

3. Procédé selon la revendication 1 caractérisé en ce que la réaction entre les chlorosilanes et l'hydrure de lithium est effectuée à une température de 380 °C plus ou moins 30 °C.

4. Procédé selon la revendication 1, caractérisé en ce que l'électrolyse est effectuée à une température de 450 °C plus ou moins 50 °C.

5. Procédé selon la revendication 1, caractérisé en ce que la réaction d'hydrogénation est effectuée à une température de 490 °C plus ou moins 20 °C et sous une pression inférieure à 5 bars.

6. Procédé selon la revendication 1, caractérisé en ce que les chlorosilanes mis en œuvre ont été obtenus par réaction entre du silicium métallurgique et du chlore ou du chlorure d'hydrogène.

7. Procédé selon les revendications 1 et 6, caractérisé en ce que le chlore ou l'acide chlorhydrique utilisés pour la réaction avec le silicium métallurgique proviennent directement ou indirectement de la réaction d'électrolyse.

8. Procédé selon la revendication 1, caractérisé en ce que lors du transfert du mélange de base enrichi en chlorure de lithium depuis le réacteur où s'effectue la réaction entre les chlorosilanes et l'hydrure de lithium, jusqu'à l'électrolyseur où on élimine les impuretés solides présentes par filtration ou par traitement avec du chlore ou du chlorure d'hydrogène.

**Claims**

1. A continuous process for the preparation of silane by the reaction of chlorosilanes with lithium hydride, electrolysis of the lithium chloride obtained and hydrogenation of the lithium obtained, these various operations being carried out in specific reactors and in a mixture of molten salts consisting of lithium chloride and at least one alkali metal chloride and/or alkaline-earth metal chloride, the composition of the said mixture being close to the known eutectic composition, which process is characterised in that:

the various reactions are carried out in a basic mixture consisting of a mixture of molten salts comprising lithium chloride, potassium chloride and, if appropriate, other alkali metal chlorides or alkaline-earth metal chlorides ; the said basic mixture conveys the various reactants employed in the different reactions : lithium hydride, lithium chloride and lithium, and circulates in a closed loop between these reactions ;

the reaction between the chlorosilanes and lithium hydride is carried out in a reactor continuously supplied with, on the one hand, chlorosilanes and, on the other hand, a mixture comprising the said basic mixture and lithium hydride, the proportion of lithium hydride does not exceed 21 moles per 100 moles of basic mixture ; the reaction produces silane and lithium chloride originating from the conversion of lithium hydride ;

the reaction of electrolysis of lithium chloride is carried out in a naturally stirred medium in an electrolyzer supplied with the mixture of molten salts originating from the reaction between the chlorosilanes and lithium hydride ; this mixture of molten salts consists of the basic mixture and the lithium chloride originating from the said reaction, the proportion of the said lithium chloride not exceeding 21 moles per 100 moles of basic mixture ; the electrolysis reaction gives rise to, on the one hand, chlorine and, on the other hand, metallic lithium, which is discharged with the basic mixture ;

the lithium hydrogenation reaction is carried out preferably with stirring in a hydrogenator supplied with, on the one hand, lithium and the basic mixture originating from the electrolyzer and, on the other hand, hydrogen ; the hydrogenation reaction produces lithium hydride originating from the conversion of lithium, which is discharged with the basic mixture towards the reactor in which the reaction between the chlorosilanes and lithium hydride, to produce silane, is carried out.

2. A process according to Claim 1, characterised in that the composition of the basic mixture is depleted by 1 to 4 mole % of lithium chloride relative to the eutectic composition of the salts forming the said basic mixture.

3. A process according to Claim 1, characterised in that the reaction between the chlorosilanes and lithium hydride is carried out at a temperature of 380 °C plus or minus 30 °C.

4. A process according to Claim 1, characterised in that the electrolysis is carried out at a temperature of 450 °C plus or minus 50 °C.

5. A process according to Claim 1, characterised in that the hydrogenation reaction is carried out at a temperature of 490 °C plus or minus 20 °C and at a pressure below 5 bars.

6. A process according to Claim 1, characterised in that the chlorosilanes employed have been produced by a reaction between metallurgical silicon and chlorine or hydrogen chloride.

7. A process according to Claims 1 and 6, characterised in that the chlorine or hydrochloric acid which are employed for the reaction with metallurgical silicon originate directly or indirectly from the electrolysis reaction.

8. A process according to Claim 1, characterised in that during the transfer of the basic mixture enriched with lithium chloride from the reactor where the reaction between the chlorosilanes and lithium hydride takes place, to the electrolyzer, the solid impurities present are removed by filtration or by treatment with chlorine or with hydrogen chloride.

**Patentansprüche**

1. Kontinuierliches Verfahren zur Herstellung von Silan durch Einwirkung von Chlorsilanen auf Lithiumhydrid, Elektrolyse des erhaltenen Lithiumchlorids und Hydrierung des erhaltenen Lithiums, wobei diese verschiedenen Verfahrensschritte in spezifischen Reaktoren und in einem Gemisch von geschmolzenen Salzen, das aus Lithiumchlorid und wenigstens einem Alkali- und/oder Erdalkalichlorid besteht und dessen Zusammensetzung derjenigen der bekannten eutektischen Zusammensetzung ähnlich ist, durchgeführt werden, dadurch gekennzeichnet, daß :

die verschiedenen Reaktionen in einem Basisgemisch durchgeführt werden, das aus einer Mischung geschmolzener Salze besteht, die Lithiumchlorid, Kaliumchlorid und gegebenenfalls andere Alkali- oder Erdalkalichloride enthält, wobei die genannte Basismischung die in den unterschiedlichen Reaktionen eingesetzten diversen Reaktionspartner Lithiumhydrid, Lithiumchlorid und Lithium transportiert und in einer geschlossenen Schleife zwischen diesen Reaktionen zirkuliert ;

die Reaktion zwischen den Chlorsilanen und dem Lithiumhydrid in einem Reaktor durchgeführt wird, dem kontinuierlich einerseits Chlorsilane und andererseits eine Mischung zugeführt wird, die aus der genannten Basismischung und Lithiumhydrid besteht, wobei die Menge des Lithiumhydrids höchstens 21 Mol auf 100 Mol der Basismischung beträgt, und bei der Reaktion Silan und Lithiumchlorid durch die Umwandlung des Lithiumhydrids gebildet wird ;

die Elektrolysereaktion des Lithiumchlorids in natürlich bewegtem Medium in einer Elektrolyseapparatur durchgeführt wird, der die Mischung der geschmolzenen Salze aus der Reaktion zwischen den Chlorsilanen und dem Lithiumhydrid zugeführt wird, wobei die Mischung der geschmolzenen Salze aus der Basismischung und dem Lithiumchlorid aus der genannten Reaktion besteht und die Menge dieses Lithiumchlorids höchstens 21 Mol auf 100 Mol Basismischung beträgt, und daß bei der Elektrolysereaktion einerseits Chlor und andererseits metallisches Lithium freigesetzt wird, das mit der Basismischung abgezogen wird,

die Hydrierreaktion des Lithiums vorzugsweise unter Bewegung in einer Hydrierapparatur durchgeführt wird, der einerseits Lithium und die Basismischung aus der Elektrolyseapparatur und andererseits Wasserstoff zugeführt wird, wobei aus der Umwandlung des Lithiums bei der Hydrierung Lithiumhydrid erhalten wird, das mit der Basismischung abgezogen und dem Reaktor zugeführt wird, in dem die Reaktion zwischen den Chlorsilanen und dem Lithiumhydrid zur Herstellung des Silans durchgeführt wird.

2. Verfahren nach Anspruch 1, dadurch gekennzeichnet, daß die Zusammensetzung der Basismischung um 1 bis 4 Mol-% Lithiumchlorid gegenüber der eutektischen Zusammensetzung der Salze, die die genannte Basismischung enthält, vermindert ist.

3. Verfahren nach Anspruch 1, dadurch gekennzeichnet, daß die Reaktion zwischen den Chlorsilanen und dem Lithiumhydrid bei einer Temperatur von 380 °C ± 30 °C durchgeführt wird.

4. Verfahren nach Anspruch 1, dadurch gekennzeichnet, daß die Elektrolyse bei einer Temperatur von 450 °C ± 50 °C durchgeführt wird.

5. Verfahren nach Anspruch 1, dadurch gekennzeichnet, daß die Hydrierreaktion bei einer Temperatur von 490 °C ± 20 °C und bei einem Druck unter 5 bar durchgeführt wird.

6. Verfahren nach Anspruch 1, dadurch gekennzeichnet, daß die eingesetzten Chlorsilane durch Reaktion zwischen metallurgischem Silizium und Chlor oder Chlorwasserstoff erhalten werden.

7. Verfahren nach den Ansprüchen 1 und 6, dadurch gekennzeichnet, daß das zur Reaktion mit dem metallurgischen Silizium eingesetzte Chlor oder der Chlorwasserstoff direkt oder indirekt aus der Elektrolysereaktion stammen.

8. Verfahren nach Anspruch 1, dadurch gekennzeichnet, daß man bei dem Transport der an Lithiumchlorid angereicherten Basismischung aus dem Reaktor, in dem die Reaktion zwischen den Chlorsilanen und dem Lithiumhydrid durchgeführt wird, in die Elektrolyseapparatur die vorhandenen festen Verunreinigungen durch Filtration oder Behandlung mit Chlor oder Chlorwasserstoff entfernt.

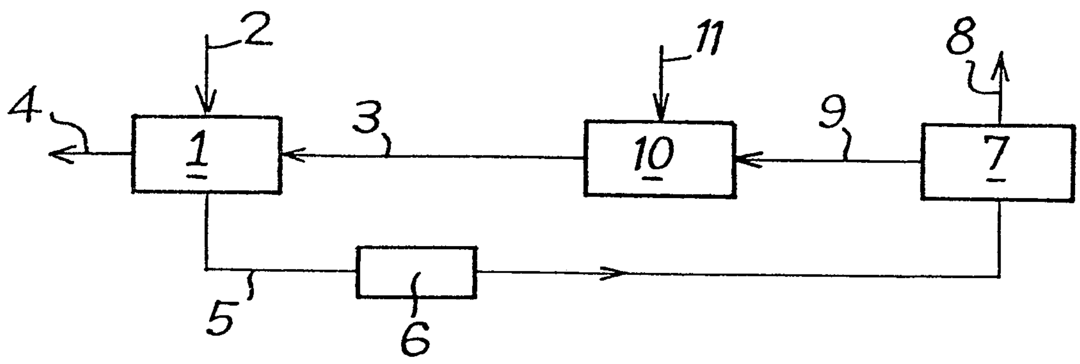
2
11
8
4
1
3
10
9
7
5
6

Fig-1

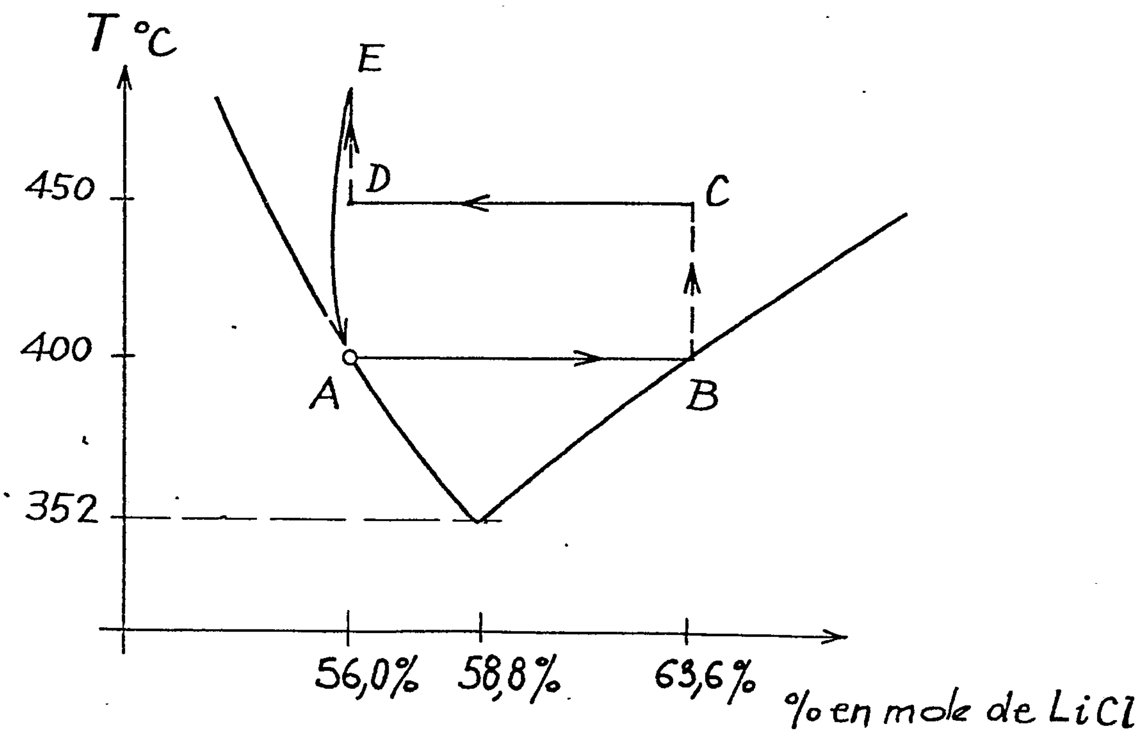
T °C
E
450
D
C
400
A
B
352
56,0%
58,8%
63,6%
% en mole de LiCl

Fig-2

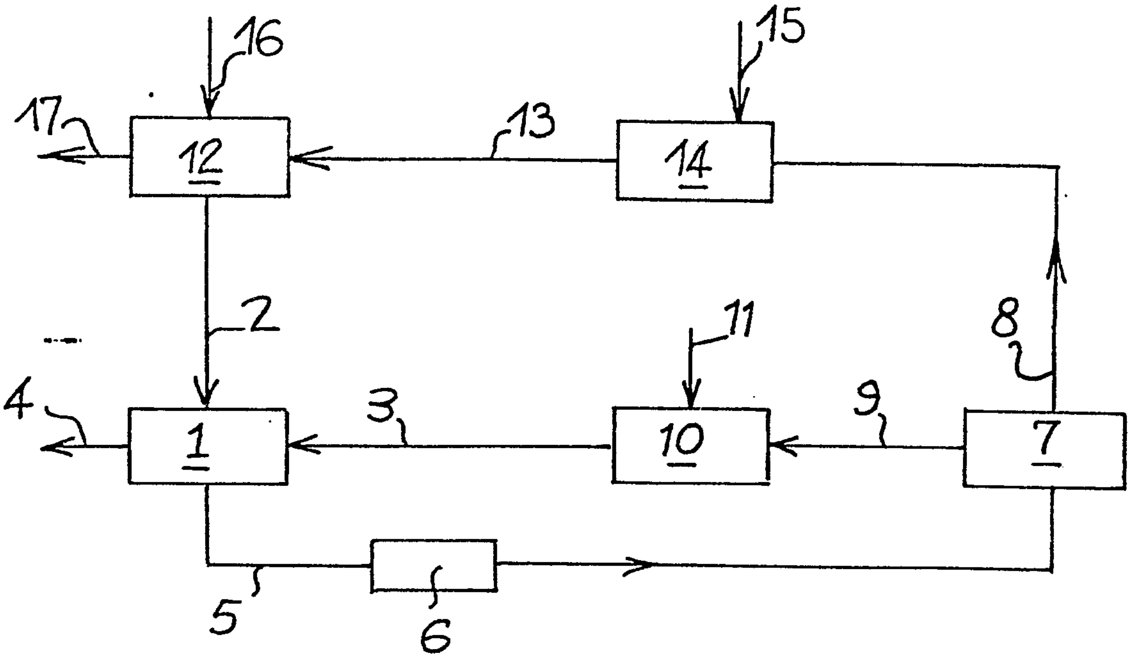


Fig-3